# EUROPÄISCHE PATENTSCHRIFT

(11) **EP 3 247 584 B1**
(45) Veröffentlichungstag und Bekanntmachung des Hinweises auf die Patenterteilung: **16.01.2019**
(21) Anmeldenummer: 16701342.4
(22) Anmeldetag: 22.01.2016
(51) Int. Cl.: A01K 1/00, B60R 11/00, B60R 11/02, B60N 2/28, F25D 19/00, G01D 11/30

(54) **AUFNAHMEVORRICHTUNG**
RECEPTACLE
DISPOSITIF DE RÉCEPTION

(30) Priorität: 23.01.2015 DE 202015100327 U
(43) Veröffentlichungstag der Anmeldung: 29.11.2017
(73) Patentinhaber: Nickel, Wolfgang, 81375 München (DE); Schwarz, Jan-Peter, 83075 Bad Feilnbach (DE)
(72) Erfinder: Nickel, Wolfgang, 81375 München (DE); Schwarz, Jan-Peter, 83075 Bad Feilnbach (DE)
(74) Vertreter: Patronus IP Patent- und Rechtsanwälte
(86) Internationale Anmeldenummer: PCT/EP2016/051363
(87) Internationale Veröffentlichungsnummer: WO 2016/116610

(56) Entgegenhaltungen:
- EP-A1- 1 369 294
- WO-A1-2005/123447
- ES-U- 1 093 530
- US-A1- 2011 233 374

## Beschreibung

Die vorliegende Erfindung betrifft eine Aufnahmevorrichtung.

In der DE 195 01 908 A1 ist ein Gestell offenbart, das an ein Karosserie- oder Fahrzeugseitenteil über einen Befestigungspunkt gekoppelt ist, der den in Form eines Schnellverschlusses ausgebildeten Haltepunkten gegenüberliegt und an einem Rahmen verdrehungssteif angebunden ist. Bei einer Ausführungsform ergibt sich eine Dreibeinanordnung, die nach einmaliger Ausrüstung des Fahrzeuges mit sitz- oder karosseriefesten Gegenstücken für die Haltepunkte ohne großen Montageaufwand ein- und ausbaubar ist.

Aus der EP 0 485 121 B1 geht ein Kindersitz hervor. Dieser umfasst einen Kinder-Sitzkörper, Trägermittel zum Aufnehmen des Kindersitz-Körpers auf einer im Wesentlichen horizontalen Oberfläche und Mittel, die mit dem Kinder-Sitzkörper zum einen in Eingriff gelangen und mit einem Erwachsenen-Sicherheitsgurt befestigbar sind, so dass der Kinder-Sitzkörper gegenüber einer nach vorwärts gerichteten Bewegung zurückgehalten wird. Die Rückenlehne des Kinder-Sitzkörpers ist ausgebildet, um gegen eine sich nach rückwärts erstreckende Ausstülpung an dem Fahrzeug vor der im Wesentlichen horizontalen Oberfläche zum Anschlag zu gelangen. Hierbei ist ein Rahmen vorgesehen, der auf einem Sitz ablegbar ist und anschließend durch Teile eines Sicherheitsgurtes fixierbar ist. Zur Abstützung des vorderen Bereichs ist an dem Rahmen eine Gabel angeordnet, die auf einem Bodenblech im Fußraum aufliegt.

In der EP 0 164 909 B1 ist ein Kindersicherheitssitz offenbart. Dieser Kindersicherheitssitz umfasst eine Einrichtung zum Halten eines Sitzbauteils in einem Fahrzeug und eine Halteeinrichtung zum Befestigen des Sicherheitssitzes im Fahrzeug, wobei die Halteeinrichtung derart geformt ist, dass wenn der Sicherheitssitz im Fahrzeug befestigt ist, ein erster und ein zweiter voneinander beabstandeter Endteil der Halteeinrichtung jeweils mit einem Sitz des Fahrzeuges und mit dem Fahrzeugboden neben dem Sitz kontaktieren. Das Sitzbauteil ist verschieblich an einem Zwischenteil der Halteeinrichtung angebracht, der zwischen den Endteilen liegt, wobei der Zwischenteil der Halteeinrichtung so geformt ist, dass wenn der Sicherheitssitz in einem Fahrzeug befestigt ist, die Lage des Sitzbauteils relativ zur Halteeinrichtung wahlweise über eine Bewegung entlang des Zwischenteils zwischen Lagen einstellbar ist, die eine zurückgelehnte Lage und eine mehr aufrechte Lage einschließen. Die darin offenbarte Einrichtung zum Befestigen des Sicherheitssitzes liegt mit einem oberen Ende an einer Rückenlehne an und stützt sich mit einem unteren Ende auf dem Fahrzeugboden ab. Die Verspannung gegen den Fahrzeugsitz erfolgt über einen Beckengurt.

Aus der DE 75 21 507 geht ein Trägergestell hervor, dass zwischen zwei hintereinander angeordneten Sitzen fixiert ist, wobei ein jeder der Sitze wenigstens einen Befestigungspunkt aufweist.

In den Dokumenten DE 10 2004 018 940 A1, DE 42 44 377 A1, EP 0734901 B1, DE 36 21 642 A1 und DE 42 30 879 A1 sind weitere Halteeinrichtungen für Kindersitze bzw. Kindersitze mit darin angeordneten Halteeinrichtungen beschrieben.

Aus der DE 10 2007 048 406 A1 geht ein Kindersitz zum Einbau in ein Fahrzeug entgegen dessen Fahrtrichtung hervor. Dieser Kindersitz umfasst einen über eine vordere freie Kante einer Sitzfläche des Kindersitzes überstehenden Bügel zur Abstützung der Vorderseite des Kindersitzes beabstandet von einer Rückenlehne eines fahrzeugeigenen Sitzes. Dieser Bügel ist um ein quer verlaufendes Element drehbar gelagert. Weiterhin sind sich entgegen der Fahrtrichtung erstreckende Profile vorgesehen, deren freie Enden mit einer in einem Fahrzeugsitz vorgesehenen Rasteinrichtung (Isofix) verbindbar sind. Weiterhin weist der Sitz an einem in Fahrtrichtung vorne liegenden Ende eine höhenverstellbare Stange auf, mittels der die in Fahrtrichtung vorne liegende Kante des Sitzes auf einer Bodenfläche im Fußraum eines Fahrzeuges abstützbar ist. Diese Stange ist über eine Drehachse gelenkig gelagert.

Aus der US 2008/0 303 321 A1 geht eine Basisvorrichtung für einen Kindersitz hervor. Diese Basisvorrichtung umfasst eine Basis zur Aufnahme eines Kindersitzes, wobei an einem vorderen Ende der Basis eine sich nach unten in Richtung Boden des Fußraumes erstreckende Stützeinrichtung vorgesehen ist. Diese Stützeinrichtung ist gelenkig über eine Achse mit der Basis verbunden. Am hinteren, entgegen der Fahrtrichtung liegenden Ende der Basis sind zwei Rasteinrichtungen zum Verbinden mit einer an einem Fahrzeugsitz angeordneten Isofix-Einrichtung vorgesehen. Am selben Ende der Basis ist ein gelenkig gelagerter Bügel angeordnet, der um eine Drehachse drehbar gelagert ist.

In der DE 10 2009 058 892 A1 ist eine Stauraumvorrichtung offenbart. Diese Stauraumvorrichtung weist einen in etwa L-förmigen Grundkörper auf, wobei ein kurzer Schenkel des L-förmigen Grundkörpers mit Rollen versehen ist, die auf einem Boden eines Fußraums anordbar sind. Weiterhin ist an dem längeren Schenkel des L-förmigen Grundkörpers ein, ebenfalls mit Rollen versehener, Bügel drehbar gelagert. Durch vertikale Anordnung des Bügels lässt sich der Grundkörper wagenartig ausbilden, um Vorrichtungen, wie z. B. einen Computer, zu verschieben. Weiterhin ist eine Einrichtung zum Eingreifen in eine an einem Fahrzeugsitz ausgebildete Fixiereinrichtung vorgesehen.

Aufgabe der vorliegenden Erfindung ist es, eine Aufnahmevorrichtung zum Anordnen in einem Kraftfahrzeug bereitzustellen, die kostengünstig herstellbar ist und auf einfache Art und Weise in einem Kraftfahrzeug fixier- und anordbar ist.

Eine weitere Aufgabe der vorliegenden Erfindung ist es, eine Aufnahmevorrichtung zum Anordnen in einem Kraftfahrzeug bereitzustellen, auf der verschiedenste Nutzlasten, insbesondere Messeinrichtungen, in vordefinierter Lage anordbar sind.

Die Erfindung weist zur Lösung dieser Aufgaben die im Anspruch 1 angegebenen Merkmale auf. Vorteilhafte Ausgestaltungen hiervon sind in den Unteransprüchen angegeben.

Erfindungsgemäß ist eine Aufnahmevorrichtung zum Anordnen in einem Kraftfahrzeug vorgesehen. Diese umfasst eine im Bereich eines Fahrzeugsitzes positionierbare Basisplatte mit einem in Fahrzeuglängsrichtung vorderen Rand und einem in Fahrzeuglängsrichtung hinteren Rand, wobei die Basisplatte an dem in Fahrzeuglängsrichtung hinteren Rand zwei Rasteinrichtungen zum Verbinden mit jeweils einem Befestigungspunkt eines Kraftfahrzeugs aufweist. Diese Basisplatte weist jeweils an dem in Fahrzeuglängsrichtung vorderen und hinteren Rand eine vordere und eine hintere Fixiereinrichtung auf, die mit der Basisplatte gelenkig verbunden ist und derart ausgebildet sind, dass die Basisplatte ortsfest im Bereich eines Fahrzeugsitzes fixierbar ist. Die Rasteinrichtungen sind gelenkig und arretierbar mit einem Koppelelement verbunden und das Koppelelement ist gelenkig und arretierbar mit dem in Fahrzeuglängsrichtung hinteren Rand der Basisplatte verbunden ist.

Unter einem Befestigungspunkt eines Kraftfahrzeugs wird im Rahmen der vorliegenden Erfindung ein mit der Karosserie eines Kraftfahrzeugs verbundenes Aufnahmemittel, wie z.B. eine ISOFIX-Verankerung, verstanden.

Durch das Vorsehen einer vorderen Fixiereinrichtung am vorderen Rand und einer hinteren Fixiereinrichtung am hinteren Rand ist es möglich die Basisplatte spielfrei in einem Kraftfahrzeug anzuordnen.

Die hintere Fixiereinrichtung kann derart ausgebildet sein, dass Sie an einer Rückenlehne eines Fahrzeugsitzes anschlägt bzw. sich dort abstützt. Hierbei kommt es zu einer Verformung der Rückenlehne des Fahrzeugsitzes durch den von der hinteren Fixiereinrichtung ausgeübten Anpressdruck.

In der Verbindung zwischen den zwei Rasteinrichtungen und dem jeweils einem Befestigungspunkt eines Kraftfahrzeugs ist auf Grund der normierten Ausbildung der ISOFIX-Verankerung (definiert in Regelung Nr. 14 der Wirtschaftskommission der Vereinten Nationen für Europa (UN/ECE)) ein Spiel in und quer zur Fahrzeuglängsrichtung vorhanden.

Dadurch, dass die hintere Fixiereinrichtung an einer Rückenlehne eines Fahrzeugsitzes anschlägt bzw. dort abstützt wird verhindert, dass sich die Vorrichtung durch das zwischen den zwei Rasteinrichtungen und dem jeweils einem Befestigungspunkt eines Kraftfahrzeugs vorhanden Spiel in und quer zur Fahrzeuglängsrichtung bewegt. Die hintere Fixiereinrichtung verhindert somit eine durch das vorstehend beschriebene Spiel vorhandene Bewegung der Aufnahmevorrichtung. Durch das Abstützen an Rückenlehne eines Fahrzeugsitzes verhindert die hintere Fixiereinrichtung zudem eine Bewegung der Aufnahmevorrichtung in vertikaler Richtung. Weiterhin wird eine Bewegung in Fahrzeuglängsrichtung verhindert.

Insbesondere ist es durch das Vorsehen des Koppelelements möglich, die Basisplatte der Aufnahmevorrichtung mittels der Rasteinrichtungen und der Fixiereinrichtungen präzise horizontal oder in einer vorbestimmten gewünschten Neigung in einem Fahrzeug anzuordnen.

Als Nutzlasten die auf der Basisplatte anordbar sind, sind im Rahmen der vorliegenden Erfindung insbesondere Messgeräte für Fahrerassistenzsysteme, zur Abstandsmessung, zur Umgebungserkennung und zum automatischen Bremsen vorgegeben. Es ist jedoch auch denkbar, beliebige andere Gegenstände, wie z.B. einen Kühlschrank, einen Kindersitz, ein Steuerungssystem, eine Transportbox für Tiere, eine Klimaanlage, ein Messsystem, ein mobiles Büro, wie z.B. einen Tisch oder einen Computer oder dergleichen auf der Basisplatte anzuordnen und diesen im Fahrzeug mitzuführen.

Insbesondere bei Messgeräten ist es für korrekte Messergebnisse von entscheidender Bedeutung, dass diese in einer exakt vordefinierten Position vorzugsweise horizontal in einem Fahrzeug anordbar und mitführbar sind.

Die vordere Fixiereinrichtung kann der derart ausgebildet sein, dass sie sich an einem vertikalen Abschnitt einer Sitzfläche oder einer Rückenlehne eines Fahrzeugsitzes oder an einem vertikalen oder horizontalen Abschnitt eines Fußraumes eines Kraftfahrzeuges abstützt bzw. in diesem Bereich anschlägt.

Die vordere Fixiereinrichtung verhindert ebenfalls ein Abheben der Aufnahmevorrichtung in vertikaler Richtung und bewirkt die spielfreie Anordnung der Aufnahmevorrichtung in und quer zur Fahrzeuglängsrichtung.

Dadurch, dass die Aufnahmevorrichtung mittels der Rasteinrichtungen und der Fixiereinrichtungen ortsfest im Bereich eines Fahrzeugs fixierbar ist, ist es möglich, verschiedenste Nutzlasten auf der Basisplatte der Aufnahmevorrichtung anzuordnen, so dass diese ortsfest in der gewünschten Position in einem Kraftfahrzeug mitführbar sind.

Die vordere und die hintere Fixiereinrichtung können als Klemmbügel ausgebildet sein, die stufenlos einstellbar und arretierbar sind. Alternativ kann die vordere Fixiereinrichtung als Gurt, insbesondere als Spanngurt, ausgebildet sein.

Dadurch, dass die Klemmbügel in einer beliebigen Winkelstellung fixierbar sind, ist es möglich, die Basisplatte exakt nivelliert horizontal in einem Fahrzeug anzuordnen und zu fixieren.

Weiterhin sind die Klemmbügel und/oder die Rasteinrichtungen in ihrer Position bzw. Winkelstellung relativ zur Basisplatte mittels entsprechender Arretiereinrichtungen arretierbar.

Die Fixiereinrichtungen und die Rasteinrichtungen üben im arretierten Zustand derart Kräfte auf die Basisplatte aus, dass die Basisplatte eigenbewegungsfrei im Fahrzeuginneren verspannbar ist.

Die Klemmbügel können elastische Kontaktmittel zum Kontaktieren mit einem Fahrzeuginnenraum, insbesondere einem Fahrzeugsitz aufweisen.

Die Kontaktmittel sind vorzugsweise aus einem Kunststoff wie z.B. Schaumstoff, PE, Gummi, Amaflex, Kautschuk oder einem ähnlichen Material ausgebildet, der einen hohen Reibungskoeffizienten aufweist und damit zur Fixierung der Aufnahmevorrichtung beiträgt.

Das Kontaktmittel kann sich beim Anpressen an die entsprechende Stelle des Fahrzeuginnenraumes auf Grund seiner Elastizität verformen und an diesen anschmiegen bzw. anpassen. Hierdurch kann das Kontaktmittel dazu beitragen ein Verrutschen der Aufnahmevorrichtung quer zur Fahrzeuglängsrichtung zu verhindern.

Weiterhin verhindert das Kontaktmittel eine Beschädigung des Fahrzeuginnenraumes durch die Fixiereinrichtungen bzw. Klemmbügel.

Zudem kann das Kontaktmittel mit einer Hülle aus Nylon, Kunstleder oder ähnlichem überzogen sein, die mittels eines Klett-, eines Reißverschlusses oder Druckknöpfen über dem Kontaktmittel angeordnet ist. Die Hülle weist dann vorzugsweise einen hohen Reibungskoeffizienten auf, wobei das Kontaktmittel die Elastizität bereitstellt.

Alternativ kann auch auf Kontaktmittel verzichtet werden und es können Klemmstreben vorgesehen werden, die aus einem unelastischen Material, vorzugsweise Kunststoff, wie z.B. PE oder PTFE, ausgebildet sind. Auch ein Vorsehen derart ausgebildeter unelastische Kontaktmittel ist möglich.

Die Rasteinrichtungen können gelenkig und arretierbar mit einem Koppelrahmen verbunden sein, wobei der Koppelrahmen gelenkig mit der in Fahrzeuglängsrichtung hinteren Kante der Basisplatte verbunden ist.

Die Aufnahmevorrichtung kann zusammenklappbar ausgebildet sein. Hierbei ist vorgesehen, dass die Klemmbügel im zusammengeklappten Zustand unter der Basisplatte angeordnet sind

Dadurch, dass die Aufnahmevorrichtung zusammenklappbar ausgebildet ist, lässt sie sich auf einfache Weise platzsparend im Fahrzeuginneren, wie z.B. im Kofferraum, mitführen.

Zudem können an einer Unterseite der Aufnahmevorrichtung, insbesondere der Basisplatte, Fußelemente vorgesehen sein. Diese Schaffen den notwendigen Raum für die Klemmbügel, da diese im zusammengeklappten Zustand unter der Basisplatte angeordnet sind.

Dadurch, dass Fußelemente vorgesehen sind, wird eine Beschädigung der Aufnahmevorrichtung und insbesondere der Klemmbügel verhindert, wenn diese beispielsweise aus dem Fahrzeug ausgebaut wird, um darauf eine entsprechende Messvorrichtung anzuordnen und zu diesem Zweck auf dem Boden abgestellt wird.

Weiterhin kann die Aufnahmevorrichtung eine Messeinrichtung aufweisen, mittels der die horizontale Ausrichtung der Basisplatte anzeigbar ist.

Als Messeinrichtung sind z.B. eine Dosenlibelle oder eine bzw. mehrere Wasserwaagen vorgesehen.

Weiterhin kann zusätzlich oder alternativ zur Arretiereinrichtung der hinteren Fixiereinrichtung eine Spanneinrichtung vorgesehen sein, mittels der die hintere Fixiereinrichtung in Richtung einer Rückenlehne eines Fahrzeugsitzes spannbar ist.

Die Spanneinrichtung kann eine Ratscheneinrichtung umfassen, wobei vorzugsweise die vordere Fixiereinrichtung mit einem Betätigungselement der Ratscheneinrichtung gekoppelt ist, und wobei die Ratscheneinrichtung über einen Seilzug und eine Umlenkeinrichtung mit dem hinteren Klemmbügel derart verbunden ist, dass dieser in Richtung einer Rückenlehne eines Fahrzeugsitzes spannbar ist.

Auf diese Weise kann die Aufnahmevorrichtung einfacher und fester in einem Fahrzeugsitz verspannt bzw. fixiert werden.

Die Erfindung wird im Folgenden anhand der Zeichnungen näher erläutert. Diese zeigen in:
- Fig. 1: eine erfindungsgemäße Aufnahmevorrichtung in einem in einem Fahrzeug eingebauten Zustand in einer seitlichen Ansicht,
- Fig. 2: die Aufnahmevorrichtung in einer Draufsicht von unten,
- Fig. 3: die Aufnahmevorrichtung in einer seitlichen Ansicht,
- Figur 4: eine weitere Ausführungsform der erfindungsgemäßen Aufnahmevorrichtung mit einer Spanneinrichtung in einem Fahrzeug eingebaut im Zustand in einer seitlichen Ansicht,
- Figur 5: die Aufnahmevorrichtung aus Figur 4 in einer Draufsicht von unten,
- Figur 6: die Aufnahmevorrichtung aus Figur 4 in einer seitlichen Ansicht, und
- Figur 7: eine weitere Ausführungsform der erfindungsgemäßen Aufnahmevorrichtung mit einer Spanneinrichtung in einer Draufsicht von unten.

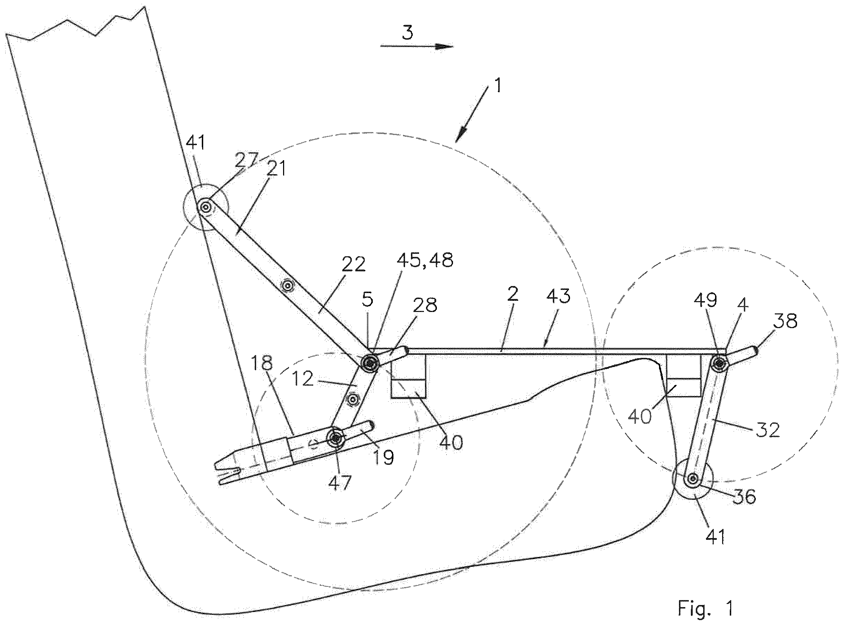

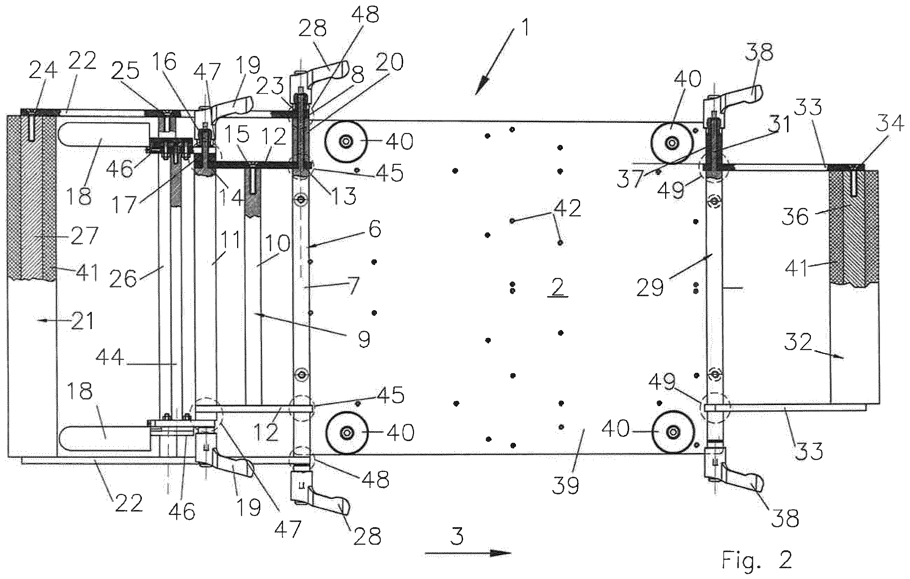

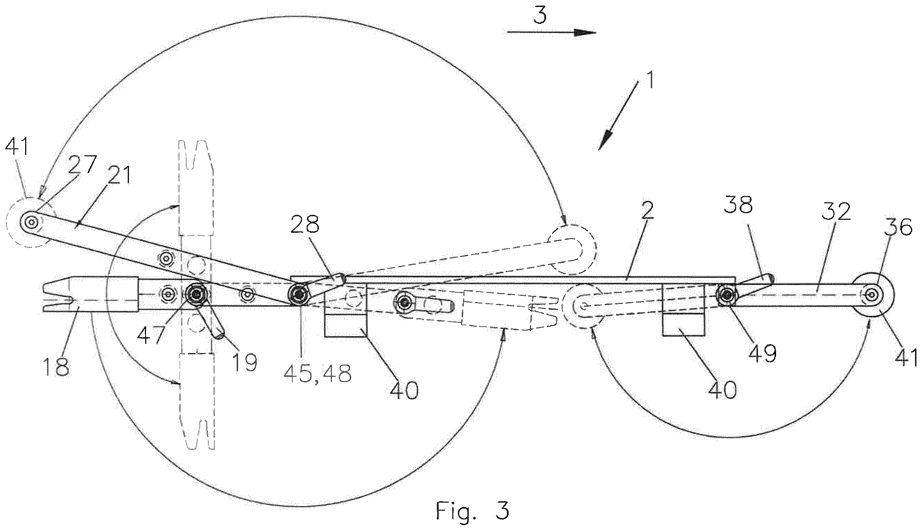

Eine Aufnahmevorrichtung 1 umfasst eine rechteckförmige Basisplatte 2 (Figuren 1 bis 3).

Die Basisplatte 2 weist einen in Fahrzeuglängsrichtung 3 vorne liegenden Rand 4 und einen in Fahrzeuglängsrichtung 3 hinten liegenden Rand 5 auf.

An dem in Fahrzeuglängsrichtung 3 hinten liegenden Rand 5 ist eine sich quer zur Fahrzeuglängsrichtung 3 erstreckende vordere Gelenkaufnahme 6 angeordnet.

Die Gelenkaufnahme 6 umfasst einen Befestigungsabschnitt 7, über den die Gelenkaufnahme 6 mit der Basisplatte 2, beispielsweise mittels Schraubenverbindungen, verbunden ist.

Am Befestigungsabschnitt 7 sind Gewindestangen 8 vorgesehen, die vorzugsweise in entsprechende Gewindebohrungen am Befestigungsabschnitt 7 eingesetzt sind. Alternativ können die Gewindestangen 8 auch einstückig am Befestigungsabschnitt 7 angeformt sein. Die Gewindestangen 8 erstrecken sich somit quer zur Fahrzeuglängsrichtung 3 von der Basisplatte 2 nach außen.

An den Gewindestangen 8 der Gelenkaufnahme 6 ist ein Koppelelement 9 gelenkig gelagert. Diese Lagerung wird als erste Koppellagerung 45 bezeichnet.

Das Koppelelement 9 umfasst eine quer zur Fahrzeuglängsrichtung 3 verlaufende Versteifungsstrebe 10, eine ebenfalls quer zur Fahrzeuglängsrichtung 3 angeordnete Verbindungsstrebe 11 und zwei sich in Fahrzeuglängsrichtung 3 erstreckende Längsstreben 12.

In den Längsstreben 12 ist eine in Fahrzeuglängsrichtung 3 vorne liegende vordere Bohrung 13, eine in Fahrzeuglängsrichtung 3 hinten liegende hintere Bohrung 14 und eine dazwischen angeordnete mittlere Bohrung 15 ausgebildet. Die Verbindungsstrebe 11 ist aus einem zylindrischen Körper ausgebildet, an dessen beiden Enden ebenfalls Gewindestangen 16 in entsprechende Gewindebohrungen eingesetzt sind, die sich quer zur Fahrzeuglängsrichtung 3 erstrecken. Alternativ können diese auch einstückig angeformt sein. Um eine Relativbewegung bzw. ein Verdrehen der der Verbindungsstrebe 11 bzgl. der Längsstreben 12 zu verhindern kann zwischen diesen Elementen 11, 12 eine Madenschraube, ein Passstift oder eine andere geeignete Verdrehsicherung vorgesehen sein.

Im Bereich zwischen den beiden mittleren Bohrungen 15 der Längsstreben 12 ist die Versteifungsstrebe 10 angeordnet, wobei die Versteifungsstrebe 10 über sich durch die mittleren Bohrungen 14 erstreckende Schrauben mit den beiden Längsstreben 12 verbunden ist. Dementsprechend sind in der Versteifungsstrebe 10 Sackbohrungen mit entsprechenden Gewinden ausgebildet.

In den beiden in Fahrzeuglängsrichtung 3 vorne liegenden vorderen Bohrungen 13 der Längsstreben 12 sind die Gewindestangen 8 der Gelenkaufnahme 6 angeordnet.

In den beiden in Fahrzeuglängsrichtung 3 hinteren Bohrungen 14 sind die Gewindestangen 16 der Verbindungsstrebe 11 angeordnet.

Weiterhin sind auf diesen Gewindestangen 16 Distanzhülsen 17 vorgesehen. Die Distanzhülsen 17 sind bspw. aus Aluminium ausgebildet, wobei an den Enden der Distanzhülsen 17 Beilagscheiben (nicht dargestellt) aus Messing angeordnet sind. Die Beilagscheiben reduzieren die Reibung bei der Benutzung der erfindungsgemäßen Aufnahmevorrichtung 1 zwischen den entsprechenden angrenzenden Bauteilen und erleichtern auf diese Weise die Benutzung.

Auf den Distanzhülsen 17 sind drehbar Abschnitte 46 von Rasteinrichtungen 18 gelenkig gelagert. Diese Lagerung wird als zweite Koppellagerung 47 bezeichnet.

Im Bereich zwischen den Abschnitten 46 der Rasteinrichtungen 18 ist eine quer zur Fahrzeuglängsrichtung verlaufende Distanzstrebe 44 angeordnet. Die Distanzstrebe 44 definiert den Abstand der beiden Rasteinrichtungen 18 zueinander. Insbesondere verhindert die Distanzstrebe 44, dass sich die Rasteinrichtungen 18 in verschieden Richtungen oder in unterschiedlichem Winkel bzgl. der zweiten Koppellagerung 47 drehen.

Die Position der Rasteinrichtungen 18 bezüglich dem Koppelelement bzw. insbesondere bezüglich der Verbindungsstrebe 11 ist über eine mittels eines Hebels 19 betätigbare Mutter fixierbar. Somit ist die zweite Koppellagerung 47 mittels der Hebel 19 blockierbar.

Die Rasteinrichtungen 18 sind vorzugsweise derart als Schnappverschlüsse ausgebildet, dass sie entsprechend in die in einem Kraftfahrzeug vorgesehenen Isofix-Verankerungen (nicht dargestellt) einrasten können. Zum Einrasten entsprechender Rastnasen (nicht dargestellt) in die Isofix-Verankerungen sind Schnellschnappverschlüsse (nicht dargestellt) vorgesehen.

Im Bereich der vorderen Bohrungen 13 der Längsstreben 12 und auf den Gewindestangen 8 der Gelenkaufnahme 6 sind ebenfalls Distanzhülsen 20 angeordnet. Die Distanzhülsen 20 sind bspw. aus Aluminium ausgebildet, wobei an den Enden der Distanzhülsen 20 Beilagscheiben (nicht dargestellt) aus Messing angeordnet sind.

Weiterhin sind die Gewindestangen 8 der Gelenkaufnahme 6 zum gelenkigen Verbinden mit einer in Fahrzeuglängsrichtung 3 hinteren Fixiereinrichtung 21 vorgesehen. Die gelenkige Verbindung mit der Fixiereinrichtung 21 wird als hinteres Fixiergelenk 48 bezeichnet.

Die Fixiereinrichtung 21 ist als Klemmbügel ausgebildet.

Der Klemmbügel 21 umfasst zwei sich in Fahrzeuglängsrichtung 3 erstreckende hintere Längsstreben 22, die jeweils an einem in Fahrzeuglängsrichtung 3 vorderen Ende eine vordere Bohrung 23 und eine am in Fahrzeuglängsrichtung 3 hinteren Ende eine hintere Bohrung 24 sowie eine dazwischenliegende mittlere Bohrung 25 aufweisen.

Im Bereich der beiden mittleren Bohrungen 25 des Klemmbügels 21 ist eine quer zur Fahrzeuglängsrichtung 3 angeordnete Verbindungsstrebe 26 fixiert.

Zum Fixieren der Verbindungsstrebe 26 weist diese Sackbohrungen mit entsprechenden Gewinden auf, so dass in die mittleren Bohrungen 25 der Längsstreben 22 Schrauben einsetzbar sind, die über die entsprechenden Gewinde in der Verbindungsstrebe 26 fixierbar sind.

In dem in Fahrzeuglängsrichtung 3 hinten liegenden hinteren Bohrungen 24 ist eine ebenfalls quer zur Fahrzeuglängsrichtung 3 angeordnete hintere Klemmstrebe 27 angeordnet.

Die Klemmstrebe 27 weist ebenfalls entsprechende Sackbohrungen mit darin ausgeformten Gewinden auf um mittels Schrauben mit den hinteren Bohrungen 24 der Längsstreben 22 verbunden zu werden.

Über die vorderen Bohrungen 23 sind die Längsstreben 22 mit den Gewindestangen 8 der Gelenkaufnahme 6 gelenkig verbunden.

Zum Fixieren der gelenkigen Verbindung bzw. der Position des Klemmbügels 27 relativ zur Basisplatte ist eine auf den Gewindestangen 8 angeordnete Mutter vorgesehen (nicht dargestellt), die über einen entsprechenden Hebel 28 arretierbar ist. Der Hebel 28 ist somit zum Arretieren des hinteren Fixiergelenkes 48 und der ersten Koppellagerung 45 vorgesehen.

Im Bereich des vorderen Randes 5 der Basisplatte ist eine vordere Gelenkaufnahme 29 an der Basisplatte 2 fixiert.

Die Gelenkaufnahme 29 weist einen Befestigungsabschnitt 30 auf, an dessen Enden Gewindestangen 31 in entsprechende Gewindebohrungen quer zur Fahrzeuglängsrichtung 3 eingesetzt sind. Alternativ können diese auch einstückig angeformt sein. Ein vorderer Klemmbügel 32 umfasst zwei sich in Fahrzeuglängsrichtung 3 erstreckende vordere Längsstreben 33. In den Längsstreben 33 ist eine in Fahrzeuglängsrichtung vorne liegende vordere Bohrung 34 und eine entgegen der Fahrzeuglängsrichtung hinten liegende hintere Bohrung 35 ausgebildet.

Im Bereich zwischen den beiden vorderen Bohrungen 34 der Längsstreben 33 ist eine vordere Klemmstrebe 36 angeordnet, die mit den beiden Längsstreben 33 über entsprechende sich durch die beiden vorderen Bohrungen 34 erstreckende Schrauben verbunden ist. Zum Aufnehmen und Fixieren der beiden Schrauben sind in den Klemmstreben 36 Sackbohrungen mit entsprechenden Gewinden (nicht dargestellt) ausgebildet.

In den beiden hinteren Bohrungen 35 sind die Gewindestangen 31 der vorderen Gelenkaufnahme gelenkig gelagert. Diese gelenkige Verbindung mit dem vorderen Klemmbügel 32 wird als vorderes Fixiergelenk bezeichnet.

Über den Längsstreben 33 sind Distanzhülsen 37 angeordnet. Die Position des Klemmbügels 32 ist mittels der über Hebel 38 betätigbaren Muttern einstell- und arretierbar. D.h. das vordere Fixiergelenk ist über die Hebel 38 arretierbar. Die Distanzhülsen 37 sind bspw. aus Aluminium ausgebildet, wobei an den Enden der Distanzhülsen 37 Beilagscheiben (nicht dargestellt) aus Messing angeordnet sind.

Sowohl über der hinteren Klemmstrebe 27 als auch über der vorderen Klemmstrebe 36 sind rohrförmige elastische Kontaktmittel 41 angeordnet. Die Rohrförmigen Kontaktmittel sind aus einem Kunststoff wie z.B. Schaumstoff, PE, Gummi, Amaflex, Kautschuk oder einem ähnlichen Material ausgebildet. Die Kontaktmittel können von einer Hülle (nicht dargestellt) umgeben sein. Alternativ kann auf die Kontaktmittel verzichtet werden. Dann ist vorgesehen die Klemmstreben 27, 36 aus einen unelastischen Kunststoff, wie z.B. PU, PE oder PTFE, auszubilden. Auch derart unelastisch ausgebildete Kontaktmittel sind möglich.

Die beiden Gelenkaufnahmen 6, 29 sind vorzugsweise an einer Unterseite 39 der Basisplatte 2 fixiert.

Weiterhin sind auf der Unterseite 39 der Basisplatte 2 Standfüße 40 befestigt. Die Standfüße 40 umfassen Abstandshalter (nicht dargestellt) aus Kunststoff und scheibenförmige Gummielemente (nicht dargestellt), die an der Unterseite 39 der Basisplatte 2 festgeschraubt sind.

Auf der Oberseite 43 der Basisplatte 2 ist eine Messeinrichtung (nicht dargestellt) vorgesehen, mittels der die horizontale Ausrichtung der Basisplatte 2 anzeigbar ist. Als Messeinrichtung sind z.B. eine Dosenlibelle oder eine bzw. mehrere Wasserwaagen vorgesehen.

In der Basisplatte 2 sind Gewindebohrungen ausgebildet, um Nutzlasten, wie z.B. Messgeräte, auf einer Oberseite 43 der Basisplatte 2 zu fixieren. Alternativ kann die Basisplatte auch T-förmigen Nuten mit entsprechenden T-Nutensteinen bzw. - stücken zum Fixieren von Nutzlasten aufweisen. Gemäß einer weiteren Alternative können auf der Basisplatte 2 auch Profilschienen, bspw. aus Aluminium oder Kunststoff angeordnet bzw. fixiert sein.

Die Aufnahmevorrichtung 1 bzw. insbesondere die Klemmbügel 21, 32 und die Basisplatte 2 sind vorzugsweise aus Aluminium ausgebildet.

Im Folgenden wird die Verwendung der erfindungsgemäßen Aufnahmevorrichtung 1 beschrieben.

Zunächst wird das gewünschte Messgerät auf der Basisplatte 2 fixiert. Die Fixierung des Messgerätes kann bspw. mittels Schrauben erfolgen, die in entsprechende in der Basisplatte 2 ausgebildete Gewindebohrungen eingreifen. Die Gewindebohrungen können in der Basisplatte in vorbestimmten gängigen Rasterungen ausgebildet sein, so dass verschiedenste Messgeräte darauf anordbar sind.

Anschließend wird die Aufnahmevorrichtung 1 auf einer Sitzfläche eines Fahrzeugsitzes angeordnet.

Dann werden die Rasteinrichtungen 18 In-Eingriff mit entsprechenden in einem Fahrzeugsitz vorgesehenen Isofix-Verankerungen gebracht.

Dann erfolgt eine horizontale Ausrichtung der Basisplatte 2 an Hand der Messeinrichtung. Diese Ausrichtung kann auch lediglich ein Vorausrichtung darstellen. Je nach Geometrie der Sitzfläche eines Fahrzeugsitzes kann es sein, dass die Basisplatte 2 auf einer in Fahrzeuglängsrichtung 3 vorne liegenden Kante des Fahrzeugsitzes aufliegt.

Nun wird mittels des Hebels 19 die zweite Koppellagerung 47 fixiert

Ggfs. ist dann eine zweite horizontale Nachausrichtung der Basisplatte 2 erforderlich.

Dann wird der hintere Klemmbügel 21 derart betätigt, dass seine Klemmstrebe 27 bzw. das darauf angeordnete Kontaktmittel 41 mit einer Rückenlehne eines Fahrzeugsitzes kontaktiert.

Dann werden über den Hebel 28 das hintere Fixiergelenk 48 und die erste Koppellagerung 45 fixiert.

Anschließend wird der vordere Klemmbügel 32 derart betätigt, dass seine Klemmstrebe 36 bzw. das darauf angeordnete Kontaktmittel 41 mit einem in Fahrzeuglängsrichtung 3 vorne angeordneten vertikalen Abschnitt einer Sitzfläche eines Fahrzeugsitzes kontaktiert.

Es kann auch vorgesehen sein, dass zunächst der hintere und anschließend der vordere Klemmbügel 27, 32 betätigt wird.

Alternativ kann die Aufnahmevorrichtung auch in einem Kofferraum eines Kraftfahrzeuges angeordnet werden. Hierbei können ggfs. noch Spanngurte notwendig sein, die mit entsprechenden Befestigungspunkten im Fahrzeuginnenraum verbunden werden, um die Aufnahmevorrichtung ortsfest zu fixieren.

In einer alternativen Ausführungsform sind die Arretiereinrichtungen bzw. Hebel 19, 28, 38 als Exzenterhebel oder Schnellspanner ausgebildet.

Die Basisplatte 2 kann auch in der Höhe derart ausgebildet sein, dass die Befestigungsabschnitte 7, 30 integraler Bestandteil der Basisplatte 2 sind.

Die Basisplatte 2 kann auch eine andere geeignete Form, wie z.B. vieleckig oder rund, aufweisen.

Die U-förmigen Klemmbügel 21, 32 können auch einstückig ausgebildet sein.

Weiterhin kann auch vorgesehen sein, dass die Klemmbügel 21, 32 in etwa T-förmig ausgebildet sind, d.h. dass an Stelle zweier Längsstreben 12, 22 nur eine zentrale Längsstrebe vorgesehen ist.

An Stelle der vorstehen beschriebenen Schraubenverbindungen können auch andere geeignete Verbindungsmittel wie z.B. Schweißverbindungen vorgesehen sein.

Zudem kann die Aufnahmevorrichtung 1 auch ohne Koppelelement 9 derart ausgebildet sein, dass die Rasteinrichtungen 18 starr bzw. über ein Gelenk an Stelle der beiden Gelenke 45, 47 mit der Basisplatte verbunden sind.

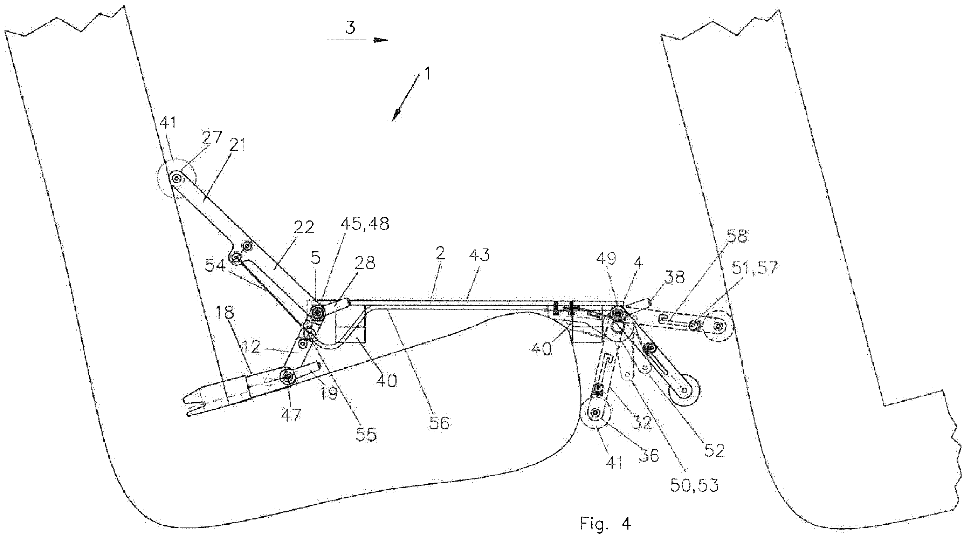

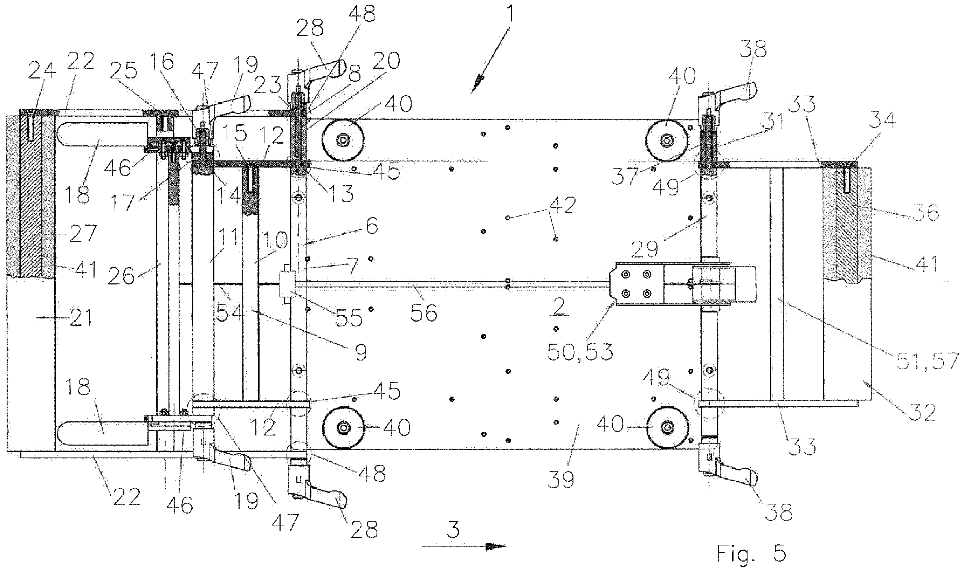

Im Folgenden wird ein weiteres Ausführungsbeispiel der erfindungsgemäßen Aufnahmevorrichtung 1 beschrieben (Figuren 4 bis 6). Sofern nichts anderes beschrieben ist, umfasst dieses Ausführungsbeispiel der Aufnahmevorrichtung 1 sämtliche Merkmale der vorstehend beschriebenen Aufnahmevorrichtung. Gleiche Teile sind mit den gleichen Bezugszeichen versehen.

Die Aufnahmevorrichtung 1 weist eine Spanneinrichtung 50 zum Betätigen bzw. Spannen der Fixiereinrichtung bzw. des hinteren Klemmbügels 21 auf. Mittels der Spanneinrichtung 50 ist die hintere Fixiereinrichtung 21 um eine Achse der hinteren Gelenkaufnahme 6 drehbar.

Die Spanneinrichtung 50 umfasst eine sich parallel zur Klemmstrebe 36 und zwischen den beiden Längsstreben 33 erstreckende Verbindungsstrebe 51.

An der Unterseite der Basisplatte 2 der ist ein Ratscheneinrichtung 53 angeordnet.

Die Ratscheneinrichtung 53 ist nach Art eines Spannschlosses eines Spanngurtes ausgebildet. Das bedeutet es ist ein Umlenksteg (nicht dargestellt) und eine geriffelte Klemmbacke (nicht dargestellt) vorgesehen, die mit einer Feder (nicht dargestellt) auf einen Steg gedrückt (nicht dargestellt) wird. Auf diese Weise lässt sich der Seilzug in eine Richtung durchziehen, wohingegen in die andere Richtung die Klemmbacke blockiert wird. Der Anstellwinkel der Klemmbacke zum Steg ist entscheidend dafür, dass das Spannschloss, auch unter Last, die Aufnahmevorrichtung, und insbesondere den hinteren Klemmbügel 21, im Sitz verspannt.

Bei der Ratscheneinrichtung 53 der vorliegenden Aufnahmevorrichtung wird jedoch der feststehende Teil des Spannschlosses als Ratschenhebel und der der Ratschenhebel des Spannschlosses als feststehender Teil verwendet. Auf diese Weise kann ein Benutzer durch Drücken des vorderen Klemmbügels den Seilzug spannen und beim Ziehen des Klemmbügels bzw. beim kraftfreien zurückratschen reicht die magnetische Kraft des Magneten zur Mitnahme des Ratschenhebels 52 aus.

Die Verbindungsstrebe 51 bildet ein Betätigungselement für einen Ratschenhebel 52 der Ratscheneinrichtung 53 aus.

Die Verbindungsstrebe 51 bildet zudem eine Drückwelle 57 aus und weist in etwa mittig einen Magneten (nicht dargestellt) auf. Die Drückwelle 57 ist in entsprechenden in den Längsstreben 33 ausgebildeten Langlöchern 58 geführt. Die Drückwelle 57 kann aus zwei außenliegenden Rohrabschnitten und einem dazwischen angeordneten Magneten, bspw. einem Ringmagneten ausgebildet sein. Alternativ ist auch eine mechanische Kopplung der Verbindungsstrebe 51 mit dem Ratschenhebel 52 über entsprechende Rastmittel oder einen Schieber möglich.

Über die Drückwelle 57 mit Magnet ist der Ratschenhebel 52 mit der Verbindungsstrebe 51 gekoppelt. Um nach dem Spannen des Hinteren Klemmbügles 21 auch den vorderen Klemmbügel positionieren zu können ist die magnetische Verbindung zwischen Drückwelle und Verbindungsstrebe 51 mittels des Magneten vorgesehen. Durch die magnetische Verbindung lässt sich die Verbindungsstrebe 51 von der Drückwelle 57 entkoppeln, so dass der vordere Klemmbügel 32 wieder frei beweglich ist, um die Aufnahmevorrichtung 1 fest im Fahrzeuginnenraum zu verspannen.

Der Ratschenmechanismus 53 ist somit durch Betätigen bzw. Drücken des vorderen Klemmbügels 32 derart, dass dieser sich um die Achse der vorderen Gelenkaufnahme 29 dreht, betätigbar.

Die Ratscheneinrichtung 53 betätigt einen Seilzug 54, der in etwa mittig im Bereich der Längsstreben 22 an der Verbindungsstrebe 26 des hinteren Klemmbügels 21 befestigt ist.

Zum Führen und Umlenken des Seilzugs kann eine Umlenkeinrichtung (nicht dargestellt) vorgesehen sein. Vorzugsweise ist eine Aufnahmeeinrichtung 55 vorgesehen. Die Aufnahmeeinrichtung 55 ist auf der Unterseite der Basisplatte 2 der Aufnahmevorrichtung 1 in etwa im Bereich des Befestigungsabschnitts 7 angeordnet und vorzugsweise drehbar gelagert.

Der Seilzug 54 ist vorzugsweise ein Bowdenzug, wobei die entsprechende Aufnahmeeinrichtung 55 dann als Bowdenzugaufnahme ausgebildet ist. Die Führung des Seilzugs von der Ratscheneinrichtung 53 bis zur Aufnahmeeinrichtung 55 erfolgt mittels einer entsprechenden Bowdenzughülse.

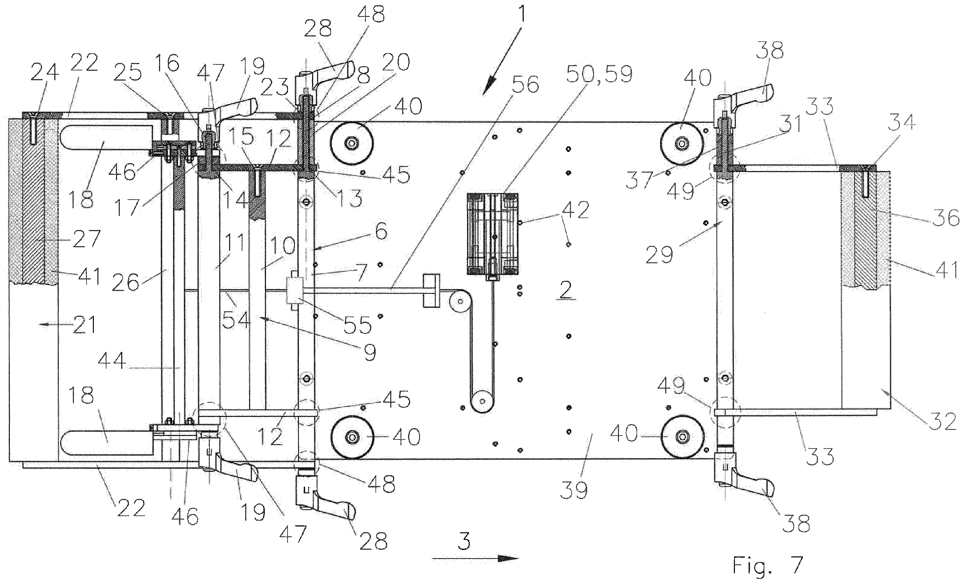

Weiterhin ist es auch alternativ zur vorstehenden Ratscheneinrichtung 53 möglich, die Spanneinrichtung 50 als pneumatische oder hydraulische Einrichtung zur Betätigung des Seilzugs mittels eines Pneumatikzylinders 59 auszubilden (Figur 7).

Die Druckbeaufschlagung eines derartigen Pneumatikzylinders 59 kann mittels eines Schlauchventils erfolgen. Alternativ ist es auch möglich, zur Betätigung einen Kleinkompressor oder eine manuell über dem Klemmbügel 32 betätigbare Pumpe vorzusehen.

Alternativ kann die Ratscheneinrichtung auch vom Benutzer direkt am Ratschenhebel 52 ohne Klemmbügel 32 oder Drückwelle 57 betätigt werden.

Ebenfalls könnte anstelle eines Seilzugs, der als Bowdenzug ausgeführt und demgemäß aus Metall ausgebildet ist, auch ein Seilzug aus natürlichen oder künstlichen Fasern, ein Gurt oder ein Kettenzug vorgesehen sein.

Alternativ zur vorstehend beschriebenen Spanneinrichtung 50 kann diese auch eine elektrische Seilwinde (nicht dargestellt) aufweisen.

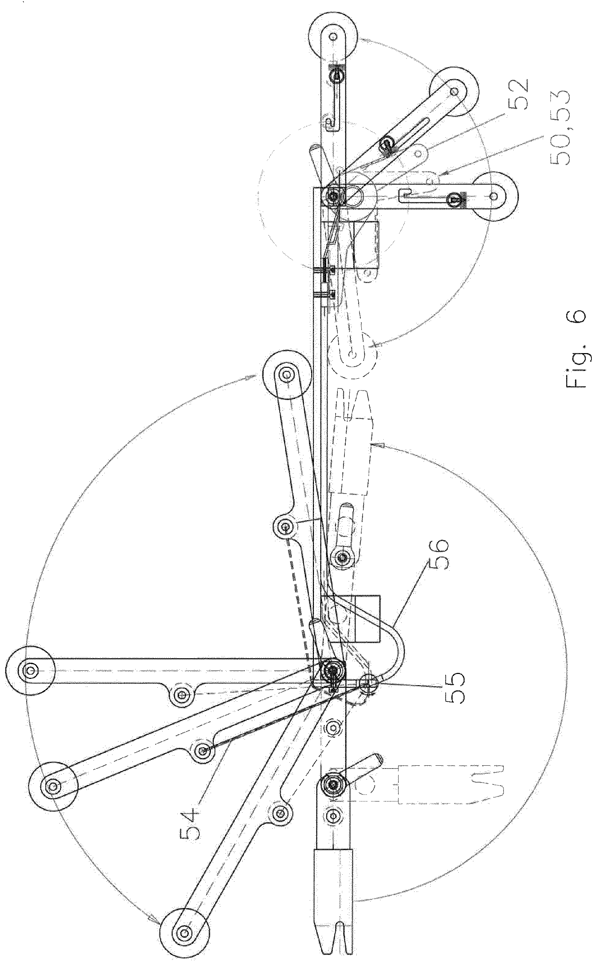

Bei den beiden vorstehend beschriebenen Ausführungsbeispielen der Aufnahmevorrichtung 1 kann auch vorgesehen sein, die Aufnahmevorrichtung über den vorderen Klemmbügel 32 an einer Rückenlehne eines Sitzes, insbesondere eines Vordersitzes, einzuklemmen. Die Klemmung erfolgt analog der im ersten Ausführungsbeispiel beschriebenen Klemmung des vorderen Klemmbügels (Figur 6).

Das vordere Fixiereinrichtung kann an Stelle eines Klemmbügles auch als Gurt, insbesondere als Spanngurt ausgebildet sein, um die Aufnahmevorrichtung in einem Fahrzeuginnenraum zu fixieren. Dies ist insbesondere bei manchen Sportwagen vorteilhaft, die im Bereich des Fußraumes der Rücksitze nur ein begrenztes Platzangebot aufweisen.

**Bezugszeichenliste**

| | | | |
|---|---|---|---|
| 1 | Aufnahmevorrichtung | 31 | Gewindestange |
| 2 | Basisplatte | 32 | vordere Fixiereinrichtung / vorderer Klemmbügel |
| 3 | Fahrzeuglängsrichtung | 33 | Längsstrebe |
| 4 | vorderer Rand | 34 | vordere Bohrung |
| 5 | hinterer Rand | 35 | hintere Bohrung |
| 6 | hintere Gelenkaufnahme | 36 | vordere Klemmstrebe |
| 7 | Befestigungsabschnitt | 37 | Distanzhülse |
| 8 | Gewindestange | 38 | Hebel |
| 9 | Koppelelement | 39 | Unterseite |
| 10 | Versteifungsstrebe | 40 | Standfuß |
| 11 | Verbindungsstrebe | 41 | Kontaktmittel |
| 12 | Längsstrebe | 42 | Bohrung |
| 13 | vordere Bohrung | 43 | Oberseite |
| 14 | hintere Bohrung | 44 | Distanzstrebe |
| 15 | mittlere Bohrung | 45 | erste Koppellagerung |
| 16 | Gewindestange | 46 | Abschnitt |
| 17 | Distanzhülse | 47 | zweite Koppellagerung |
| 18 | Rasteinrichtung | 48 | hinteres Fixiergelenk |
| 19 | Hebel | 49 | vorderes Fixiergelenk |
| 20 | Distanzhülse | 50 | Spanneinrichtung |
| 21 | hintere Fixiereinrichtung / hinterer Klemmbügel | 51 | Verbindungsstrebe |
| 22 | Längsstrebe | 52 | Ratschenhebel |
| 23 | vordere Bohrung | 53 | Ratscheneinrichtung |
| 24 | hintere Bohrung | 54 | Seilzug |
| 25 | mittlere Bohrung | 55 | Aufnahmeeinrichtung |
| 26 | Verbindungsstrebe | 56 | Bowdenzughülse |
| 27 | hintere Klemmstrebe | 57 | Drückwelle |
| 28 | Hebel | 58 | Langloch |
| 29 | vordere Gelenkaufnahme | 59 | Pneumatikzylinder |
| 30 | Befestigungsabschnitt | | |

## Patentansprüche

1. Aufnahmevorrichtung zum Anordnen in einem Kraftfahrzeug umfassend eine im Bereich eines Fahrzeugsitzes positionierbare Basisplatte (2) mit einem in Fahrzeuglängsrichtung (3) vorderen Rand (4) und einem in Fahrzeuglängsrichtung (3) hinteren Rand (5), wobei die Basisplatte (2) an dem in Fahrzeuglängsrichtung (3) hinteren Rand (4) zwei Rasteinrichtungen (18) zum Verbinden mit jeweils einem Befestigungspunkt eines Kraftfahrzeuges aufweist, und die Basisplatte (2) jeweils an dem in Fahrzeuglängsrichtung (3) vorderen und hinteren Rand (4, 5) eine vordere und eine hintere Fixiereinrichtung (21, 32) aufweist, die mit der Basisplatte (2) gelenkig (48, 49) verbunden sind und derart ausgebildet sind, dass die Basisplatte (2) ortsfest im Bereich eines Fahrzeugsitzes positionierbar ist,
**dadurch gekennzeichnet**,
die Rasteinrichtungen (18) gelenkig und arretierbar mit einen Koppelelement (9) verbunden sind und das Koppelelement (9) gelenkig (45) und arretierbar mit dem in Fahrzeuglängsrichtung (3) hinteren Rand (5) der Basisplatte (2) verbunden ist.

2. Aufnahmevorrichtung nach Anspruch 1,
**dadurch gekennzeichnet,**
**dass** die vordere und die hintere Fixiereinrichtung als Klemmbügel (21, 32) ausgebildet sind, die vorzugsweise stufenlos einstellbar und derart arretierbar sind, dass die Klemmbügel (21, 32) in einer Winkelstellung fixierbar sind, sodass die Basisplatte (2) mittels der Klemmbügel (21, 32) horizontal im Bereich eines Fahrzeugsitzes fixierbar ist oder dass der vordere Klemmbügel als Spanngurt ausgebildet ist.

3. Aufnahmevorrichtung nach Anspruch 1 oder 2,
**dadurch gekennzeichnet,**
**dass** die Fixiereinrichtungen (21, 32) und/oder die Rasteinrichtungen (18) in ihrer Position relativ zur Basisplatte (2) mittels entsprechender Arretiereinrichtungen (19, 28, 38) fixierbar sind.

4. Aufnahmevorrichtung nach einem der Ansprüche 1 bis 3,
**dadurch gekennzeichnet,**
**dass** die Fixiereinrichtungen (21, 32) und die Rasteinrichtungen (18) Kräfte auf die Basisplatte (2) derart ausüben, dass die Basisplatte (2) eigenbewegungsfrei im Bereich eines Fahrzeugsitzes verspannbar ist.

5. Aufnahmevorrichtung nach einem der Ansprüche 1 bis 4,
**dadurch gekennzeichnet,**
**dass** die Fixiereinrichtungen elastische Kontaktmittel (41) zum Kontaktieren mit einem Fahrzeuginnenraum, insbesondere einem Fahrzeugsitz aufweisen.

6. Aufnahmevorrichtung nach einem der Ansprüche 1 bis 5,
**dadurch gekennzeichnet,**
**dass** zusätzlich oder alternativ zur Arretiereinrichtung (28) der hinteren Fixiereinrichtung (21) eine Spanneinrichtung (50) vorgesehen ist, mittels der die hintere Fixiereinrichtung (21) in Richtung einer Rückenlehne eines Fahrzeugsitzes spannbar ist.

7. Aufnahmevorrichtung nach Anspruch 6,
**dadurch gekennzeichnet,**
**dass** die Spanneinrichtung (50) eine Ratscheneinrichtung (53) umfasst, wobei vorzugsweise die vordere Fixiereinrichtung (32) mit einem Betätigungselement der Ratscheneinrichtung gekoppelt ist, und wobei die Ratscheneinrichtung (53) über einen Seilzug und eine Umlenkeinrichtung mit dem hinteren Klemmbügel derart verbunden ist, dass dieser in Richtung einer Rückenlehne eines Fahrzeugsitzes spannbar ist.

8. Aufnahmevorrichtung nach einem der Ansprüche 1 bis 7,
**dadurch gekennzeichnet,**
**dass** die Aufnahmevorrichtung (1) zusammenklappbar ausgebildet ist.

9. Aufnahmevorrichtung nach einem der Ansprüche 1 bis 8,
**dadurch gekennzeichnet,**
**dass** die Aufnahmevorrichtung (1) Standfüße (40) aufweist.

10. Aufnahmevorrichtung nach einem der Ansprüche 1 bis 9,
**dadurch gekennzeichnet,**
**dass** die Aufnahmevorrichtung (1) eine Messeinrichtung aufweist, mittels der die horizontale Ausrichtung der Basisplatte (2) anzeigbar ist.

11. Aufnahmevorrichtung nach einem der Ansprüche 1 bis 10,
**dadurch gekennzeichnet,**
**dass** die hintere Fixiereinrichtung (21) derart ausgebildet ist, dass sie an einer Rückenlehne eines Fahrzeugsitzes anschlägt.

12. Aufnahmevorrichtung nach einem der Ansprüche 1 bis 11,
**dadurch gekennzeichnet,**
**dass** die vordere Fixiereinrichtung (32) derart ausgebildet ist, dass sie an einem vertikalen Abschnitt einer Sitzfläche oder einer Rückenlehne eines Fahrzeugsitzes oder an einem vertikalen oder horizontalen Abschnitt eines Fußraumes eines Kraftfahrzeuges anschlägt.

13. Aufnahmevorrichtung nach einem der Ansprüche 1 bis 12,
**dadurch gekennzeichnet,**
**dass** ein Befestigungspunkt eines Kraftfahrzeuges eine Isofix-Verankerung eines Kraftfahrzeuges ist.

## Claims

1. Receiving device for arranging in a motor vehicle comprising a base plate (2) which can be positioned in the region of a vehicle seat with a front edge (4) in the vehicle longitudinal direction (3) and a rear edge (5) in the vehicle longitudinal direction (3), wherein the base plate (2) on the the rear edge (4) in the vehicle longitudinal direction (3) has two latching devices (18) for connection to a respective attachment point of a motor vehicle, and the base plate (2) comprises respectively at the front and rear edge (4, 5) in the vehicle longitudinal direction (3) a front and a rear fixing device (21, 32), which are connected to the base plate (2) articulated (48, 49) and are formed such that the base plate (2) is positionally positionable in the region of a vehicle seat,
**characterized in that**
the latching devices (18) are connected articulated and lockable with a coupling element (9) and the coupling element (9) is connected articulated (45) and lockable with the rear edge (5) of the base plate (2) in the vehicle longitudinal direction (3).

2. Receiving device according to claim 1,
**characterized in that**
the fixing devices are designed as clamping brackets (21, 32) which are preferably infinitely adjustable and can be locked in such a manner that the clamping brackets (21, 32) can be fixed in an angular position, so that the base plate (2) by means of the clamping bracket (21, 32) can horizontally be fixed in the region of a vehicle seat or that the front clamping bracket is formed as a tensioning strap.

3. Receiving device according to claim 1 or 2,
**characterized in that**
the fixing means (21, 32) and / or the latching means (18) in their position relative to the base plate (2) are fixable by means of corresponding locking means (19, 28, 38).

4. Receiving device according to one of claims 1 to 3,
**characterized in that**
the fixing devices (21, 32) and the latching devices (18) exert forces on the base plate (2) such that the base plate (2) can be braced free of movement in the region of a vehicle seat.

5. Receiving device according to one of claims 1 to 4,
**characterized in that**
the fixing means comprise elastic contact means (41) for contacting a vehicle interior, in particular a vehicle seat.

6. Receiving device according to one of claims 1 to 5,
**characterized in that**
in addition or alternatively to the locking means (28) of the rear fixing means (21) tensioning means (50) is provided, by means of which the rear fixing means (21) can be tensioned in direction of backrest of a vehicle seat.

7. Receiving device according to claim 6,
**characterized in that**
the tensioning means (50) comprises a ratchet device (53), wherein preferably the front fixing means (32) is coupled with an actuation element of the ratchet device and wherein the ratchet device (53) is connected via a diverter and pulley to the rear clamping bracket so that the latter can be tensioned in the direction of a backrest of a vehicle seat.

8. Receiving device according to one of claims 1 to 7,
**characterized in that**
the receiving device (1) is formed collapsible.

9. Receiving device according to one of claims 1 to 8,
**characterised in that**
the receiving device (1) comprises feet (40).

10. Receiving device according to one of claims 1 to 9,
**characterized in that**
the receiving device (1) comprises a measuring device by means of which the horizontal orientation of the base plate (2) can be displayed.

11. Receiving device according to one of claims 1 to 10,
**characterized in that**
the rear fixing device (21) is designed such that it abuts against a backrest of a vehicle seat.

12. Receiving device according to one of claims 1 to 11,
**characterized in that**
the front fixing device (32) is designed such that it abuts against a vertical portion of a seat surface or a backrest of a vehicle seat for or on a vertical or horizontal portion of a footwell of a motor vehicle.

13. Receiving device according to one of claims 1 to 12,
**characterized in that**
an attachment point of a motor vehicle is an Isofix anchorage of a motor vehicle.

## Revendications

1. Dispositif récepteur destiné à être disposé dans un véhicule automobile, comprenant une plaque de base (2) pouvant être positionnée dans la zone d'un siège de véhicule avec un bord avant (4) dans la direction longitudinale du véhicule (3) et un bord arrière (5) dans la direction longitudinale du véhicule (3), dans laquelle la plaque de base (2) du véhicule dans la direction longitudinale du véhicule (3) au bord arrière (4) comporte deux dispositifs de verrouillage (18) destinés à être respectivement reliés à un point de fixation d'un véhicule automobile, et la plaque de base (2) de chaque côté du véhicule dans la direction longitudinale (3) au bord avant et au bord arrière (4, 5) présente un dispositif de fixation avant et un dispositif de fixation arrière (21, 32), qui sont reliés à la plaque de base (2) de manière articulée (48, 49) et qui sont formés de sorte que la plaque de base (2) puisse être positionnée dans la région du siège du véhicule,
**caractérisé en ce que** les dispositifs de verrouillage (18) sont reliés avec un élément d'accouplement articulé et verrouilable et que l'élément d'accouplement est relié articulé (45) et verrouilable au bord arrière (5) de la plaque de base (2) dans la direction longitudinale du véhicule (3).

2. Dispositif de réception selon la revendication 1,
**caractérisé en ce**
**que** les dispositifs de fixation avant et arrière sont conçus comme des pattes de serrage (21, 32) réglables de préférence à l'infini et pouvant être verrouillées de telle sorte que les pattes de serrage (21, 32) puissent être fixées dans une position angulaire, de sorte que la plaque de base (2) au moyen de l'étrier de serrage (21, 32), est fixé horizontalement dans la région d'un siège de véhicule, ou que la patte de serrage à l'avant est formé comme sangle d'arrêtage.

3. Dispositif de réception selon la revendication 1 ou 2,
**caractérisé en ce**
**que** les dispositifs de fixation (21, 32) et / ou les dispositifs de verrouillage (18) peuvent être fixés à leur position par rapport à la plaque de base (2) au moyen de dispositifs de verrouillage correspondants (19, 28, 38).

4. Dispositif de réception selon l'une des revendications 1 à 3,
**caractérisé en ce**
**que** les dispositifs de fixation (21, 32) et les dispositifs de verrouillage (18) exercent des forces sur la plaque de base (2), de sorte que la plaque de base (2) peut être maintenue libre de tout mouvement dans la zone du siège du véhicule.

5. Dispositif récepteur selon l'une des revendications 1 à 4, **caractérisé en ce que** les moyens de fixation comprennent des moyens de contact élastiques (41) destinés à entrer en contact avec un habitacle de véhicule, en particulier un siège de véhicule.

6. Dispositif de réception selon l'une des revendications 1 à 5,
**caractérisé en ce**
**qu'**en outre du ou alternativement au dispositif de verrouillage (28) du dispositif de fixation (21) arrière un dispositif de serrage (50) est prévu, par le moyen duquel le dispositif de fixation (21) arrière peut être serré en direction d'un dossier d'un siège de véhicule.

7. Dispositif récepteur selon la revendication 7,
**caractérisé en ce**
**que** le dispositif de serrage (50) comporte un dispositif de rochet (53), le dispositif de fixation (32) de préférence étant couplé à un élément d'actionnement du dispositif de rochet, et dans lequel le dispositif de rochet (53) est connecté à la patte de serrage par moyens de treuils et de chicane de manière que celle-ci peut être serrée en direction d'un dossier d'un siège de véhicule.

8. Dispositif de réception selon l'une des revendications 1 à 7,
**caractérisé en ce**
**que** le dispositif de réception (1) est formé pliable.

9. Dispositif de réception selon l'une des revendications 1 à 8,
**caractérisé en ce**
**que** le dispositif de réception (1) comporte des pieds (40).

10. Dispositif de réception selon l'une des revendications 1 à 9,
**caractérisé en ce**
**que** le dispositif de réception (1) comporte un dispositif de mesure permettant d'afficher l'orientation horizontale de la plaque de base (2).

11. Dispositif de réception selon l'une des revendications 1 à 10,
**caractérisé en ce**
**que** le dispositif de fixation arrière (21) est conçu pour venir en butée contre le dossier d'un siège de véhicule.

12. Dispositif de réception selon l'une des revendications 1 à 11,
**caractérisé en ce**
**que** le dispositif de fixation avant (32) est conçu pour venir en butée contre une partie verticale d'une surface ou d'un dossier d'un siège d'un siège de véhicule sur une partie verticale ou horizontale d'un repose-pieds de véhicule automobile.

13. Dispositif récepteur selon l'une des revendications 1 à 12,
**caractérisé en ce**
**qu'**un point de fixation d'un véhicule automobile est un ancrage Isofix d'un véhicule automobile.
